(19) Europäisches Patentamt
European Patent Office
Office européen des brevets

(11) EP 4 023 371 A1

(12) **DEMANDE DE BREVET EUROPEEN**

(43) Date de publication:
**06.07.2022 Bulletin 2022/27**

(21) Numéro de dépôt: **21216880.1**

(22) Date de dépôt: **22.12.2021**

(51) Classification Internationale des Brevets (IPC):
***B22F 10/28*** *(2021.01)* ***B33Y 10/00*** *(2015.01)*
***B33Y 80/00*** *(2015.01)* ***C22C 1/08*** *(2006.01)*
*B22F 5/10 (2006.01)* *B22F 3/11 (2006.01)*
*B01D 39/20 (2006.01)* *B01D 39/10 (2006.01)*
*B01D 46/10 (2006.01)*

(52) Classification Coopérative des Brevets (CPC):
(C-Sets disponibles)
**B33Y 80/00; B22F 10/28; B33Y 10/00; C22C 1/08;**
B01D 39/10; B01D 39/2027; B01D 46/106;
B22F 3/1103; B22F 5/106; B22F 10/36;
B22F 2999/00 (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **30.12.2020 FR 2014263**

(71) Demandeur: **Commissariat à l'Energie Atomique et aux Energies Alternatives**
**75015 Paris (FR)**

(72) Inventeurs:
- **MASKROT, Hicham**
**91310 Monthléry (FR)**
- **HERCHER, Olivier**
**91640 FONTENAY-LES-BRIIS (FR)**
- **SCHUSTER, Frédéric**
**78100 SAINT GERMAIN EN LAYE (FR)**

(74) Mandataire: **Germain Maureau**
**12, rue Boileau**
**69006 Lyon (FR)**

(54) **PROCÉDÉ DE FABRICATION POUR PIÈCE FONCTIONNELLE MÉTALLIQUE DÉLIMITANT UN MÉDIA DE FILTRATION POREUX, UTILISANT UNE MÉTHODE DE FABRICATION ADDITIVE, ET PIÈCE FONCTIONNELLE OBTENUE**

(57) Il est décrit un procédé de fabrication permettant l'obtention d'une pièce fonctionnelle (10) essentiellement formée dans un matériau métallique, tout ou partie de la pièce fonctionnelle (10) délimitant un média de filtration (12) perméable à un fluide et délimitant des première et deuxième faces principales (14, 16) pour une circulation préférentielle du gaz à travers le média de filtration (12). Le procédé comprend une phase principale (P1) consistant en une méthode de fabrication additive en passes (FS) successives à partir d'un plateau de support (18). Chaque passe (FS) comprend le dépôt d'au moins une couche dudit matériau métallique, le matériau déposé adhérant au matériau métallique d'au moins une couche précédemment déposée. Le dépôt est contrôlé à chaque passe (FS) d'une manière telle que l'empilement du matériau métallique déposé durant les passes (FS) successives constitue la pièce fonctionnelle (10). Le média de filtration (12) comprend un réseau coalescent de brins de liaison interconnectés selon une répartition spatiale en trois dimensions entre les première et deuxième faces principales (14, 16), les brins de liaison du réseau délimitant entre eux des pores répartis spatialement au sein du média de filtration (12) dans les trois dimensions entre les première et deuxième faces principales (14, 16).

[Fig. 1]

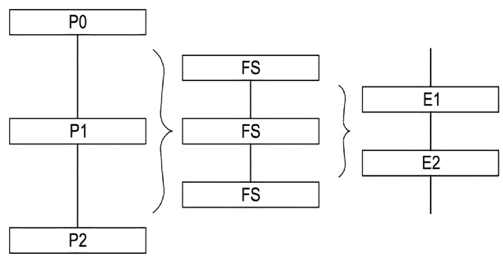


EP 4 023 371 A1

(52) Classification Coopérative des Brevets (CPC):
(Cont.)

C-Sets
B22F 2999/00, B22F 10/28, B22F 3/1103,
B22F 5/106

## Description

### Domaine technique de l'invention

La présente invention concerne un procédé de fabrication permettant l'obtention d'une pièce fonctionnelle essentiellement formée dans un matériau métallique, tout ou partie de la pièce fonctionnelle délimitant un média de filtration perméable à un fluide et délimitant des première et deuxième faces principales pour une circulation préférentielle du fluide à travers le média de filtration entre les première et deuxième faces principales.

L'invention concerne également une pièce fonctionnelle obtenue par la mise en œuvre d'un tel procédé de fabrication.

L'invention trouve une application dans tout système où une filtration d'un fluide, qu'il s'agisse d'un gaz ou d'un liquide, est nécessaire, par exemple pour de l'air. Une application possible concerne la fabrication ou la fourniture de masques répondant aux normes FFP1 ou FFP2, ou d'autres médias filtrants à très haute efficacité. Le domaine d'application peut être élargi à différents domaines de l'industrie et pour le grand public. La pièce fonctionnelle obtenue peut servir également de support de catalyseur ou d'électrodes de batteries. De manière plus générale, l'invention peut trouver une application à tout dispositif nécessitant un média de filtration à forte surface d'échange, pour une protection individuelle ou collective.

### Etat de la technique

Dans le domaine de la protection individuelle ou collective, notamment pour protéger les personnes contre la propagation et la transmission par projection ou aéroportée des virus, des microbes, des bactéries, ou des poussières, on connaît l'existence de masques portés par les personnes.

Il est connu que la quasi-totalité des équipements de protection tels que les masques chirurgicaux, les masques FFP2 et les masques grand public sont jetables.

Outre les problèmes d'approvisionnement, les équipements actuels de protection présentent plusieurs inconvénients.

Le principal inconvénient des masques grand public, des masques chirurgicaux ou FFP2, est leur caractère éphémère et non-réutilisable. Avec un temps d'utilisation de l'ordre de 3 heures, il est par conséquent nécessaire d'en consommer des quantités considérables, par exemple au minimum 24 millions par semaine pour les seuls professionnels médicaux et paramédicaux français. Il est bien évident que cela pose un réel problème écologique, surtout en cas de pandémie.

Par ailleurs, le fait que les masques soient jetés implique un risque non négligeable pour les autres personnes susceptibles de les manipuler ou d'être plus généralement à leur contact.

Une solution alternative consiste en l'utilisation de masques de protection réalisés dans un tissu lavable. Les inconvénients de ce caractère éphémère sont l'accumulation importante de déchets souillés et les risques potentiels liés à leur gestion. Par ailleurs, il ne peut être omis que le lavage d'une quantité importante de masques (plusieurs millions par jour) puisse avoir un impact environnemental dû aux effluents de lavage.

Il existe déjà des filtres métalliques fabriqués par frittage de poudres, mais ces procédés sont très onéreux, complexes et les filtres obtenus ont une distribution de porosité hétérogène. Les formes obtenues sont également limitées. De plus, il s'avère en pratique que malheureusement la perte de charge subie par le fluide filtré traversant le filtre augmente en même temps que l'efficacité de filtration. Ainsi, l'obtention d'un filtre de très haute efficacité implique un niveau de charge pouvant s'avérer rédhibitoire dans certaines applications.

### Objet de l'invention

La présente invention a pour but de proposer un procédé de fabrication du type précité qui permette de répondre aux problématiques listées ci-avant en lien avec l'état de la technique cité.

Notamment, le but de l'invention est de proposer une solution qui réponde aux objectifs suivants :

- proposer des médias de filtration présentant une durabilité très élevée, à savoir leur durée de vie et leur durée d'usage, notamment réutilisables à vie,
- limiter largement la quantité de déchets, permettant de mieux les inscrire dans l'optique d'un développement durable,
- proposer des médias de filtration ayant une efficacité de filtration élevée,
- obtenir des médias de filtration présentant une perte de charge faible pour le fluide filtré,
- proposer des médias de filtration aptes à répondre aux critères d'un masque de catégorie FFP1 ou FFP2 ou d'un média de filtration de très haute efficacité typiquement selon la classification européenne EN 1822 :2009 ou selon la norme EN 779 :2012, notamment offrant un taux de filtration supérieur à 99% pour des particules supérieures à 100 nm,
- être de fabrication simple et peu onéreuse,
- permettre l'obtention de médias de filtration de formes complexes,
- offrir une distribution homogène des pores au sein des médias de filtration.

Ce but peut être atteint grâce à la mise en œuvre d'un procédé de fabrication permettant l'obtention d'une pièce fonctionnelle essentiellement formée dans un matériau métallique, tout ou partie de la pièce fonctionnelle délimitant un média de filtration perméable à un fluide et délimitant des première et deuxième faces principales pour une circulation préférentielle dudit gaz à travers le média de filtration entre les première et deuxième faces principales, le procédé de fabrication comprenant une phase principale consistant en une méthode de fabrication additive en passes successives à partir d'un plateau de support, chaque passe comprenant le dépôt d'au moins une couche dudit matériau métallique, le matériau déposé adhérant au matériau métallique d'au moins une couche précédemment déposée, le dépôt du matériau métallique au niveau de chaque couche étant contrôlé à chaque passe d'une manière telle que l'empilement du matériau métallique déposé durant lesdites passes successives constitue ladite pièce fonctionnelle, dont le média de filtration comprend un réseau coalescent de brins de liaison interconnectés selon une répartition spatiale en trois dimensions entre les première et deuxième faces principales, les brins de liaison dudit réseau délimitant entre eux des pores répartis spatialement au sein du média de filtration dans les trois dimensions entre les première et deuxième faces principales.

Un avantage de ce procédé de fabrication est d'être simple et économique. Par ailleurs, il est possible de fabriquer aisément des pièces de formes simples ou complexes, qu'il s'agisse de surfaces planes (disque, carré, rectangle, triangle, polygone) ou de surfaces gauches (tube, sphère, cylindre, pyramide, masques faciales). Il est possible de parvenir aisément à une porosité contrôlée, c'est-à-dire avec une parfaite maitrise de l'architecture, de la taille et de la distribution des pores et avec conjointement une parfaite maitrise de l'architecture, de la longueur, de l'épaisseur des brins de liaison du réseau coalescent métallique. Il est possible de parvenir aisément à un média de filtration ayant une épaisseur allant de 400 $\mu$m à 500 mm. Il est possible de parvenir très aisément à une distribution homogène des pores au sein du média de filtration, garantissant une bonne efficacité et une bonne fiabilité. Contrairement aux solutions par frittage de poudre, il est possible de parvenir à une très haute efficacité de filtration tout en conservant un niveau de perte de charge assez faible. Le média de filtration ainsi fabriqué, outre les avantages précités, est particulièrement avantageux du fait de sa grande durabilité, quasi à vie, et de son très faible impact environnemental.

Certains aspects préférés mais non limitatifs de ce procédé de fabrication sont les suivants, ces caractéristiques pouvant être prises isolément ou en combinaison.

Le média de filtration obtenu durant la phase principale est contenu dans un plan principal formant un angle compris entre 30° et 90° avec le plateau de support.

L'épaisseur du média de filtration, prise entre les première et deuxième faces principales, est comprise entre 400 $\mu$m et 500 mm.

Le matériau métallique dans lequel la pièce fonctionnelle est essentiellement constituée comprend au moins l'un des matériaux suivants sous forme pure, d'alliage ou d'oxyde : aluminium, acier inoxydable, nickel, cobalt, fer, cuivre, palladium, titane, tungstène, argent, platine.

A chaque passe, le plateau de support est chauffé à une température comprise entre la température ambiante et 250°C, notamment égale à 200°C à 10% près.

Chaque passe comprend une étape de dépôt d'au moins une couche de poudre formée dans ledit matériau métallique puis une étape de fusion sélective de la poudre précédemment déposée par un apport d'énergie localisé sous l'action d'un faisceau laser, la fusion sélective du matériau métallique étant commandée à l'aide d'une base de données informatique préétablie, laquelle base de données informatique commande à chaque passe, par un programme d'ordinateur pilotant un déplacement spatial du faisceau laser par rapport à la poudre de matériau métallique précédemment déposée, au moins l'un des paramètres choisi parmi : une trajectoire relative entre le faisceau laser et la poudre précédemment déposée, une vitesse de déplacement correspondant à une vitesse relative entre le faisceau laser et la poudre précédemment déposée, une puissance de faisceau laser, une densité de puissance de faisceau laser.

Chaque couche de poudre présente une épaisseur comprise entre 20 $\mu$m et 100 $\mu$m.

A chaque étape de fusion sélective, la trajectoire adoptée par le faisceau laser comprend des vecteurs de déplacement où les vecteurs de déplacement sont décalés spatialement deux à deux suivant une valeur de décalage et le taux de porosité des pores au sein du média de filtration est ajusté, pour une puissance de faisceau laser donnée et une épaisseur de couche donnée, en adaptant ladite valeur de décalage, le taux de porosité augmentant au fur et à mesure que la valeur de décalage augmente.

La puissance de faisceau laser utilisée à chaque passe durant l'étape de fusion sélective, au niveau du média de filtration, est comprise entre 30% et 90% d'une valeur de puissance de faisceau laser permettant l'obtention d'un bloc non poreux dépourvu de pores formé dans ledit matériau métallique.

A chaque étape de fusion sélective, le taux de porosité des pores au sein du média de filtration est ajusté, pour une puissance de faisceau laser donnée et une épaisseur de couche donnée, en adaptant la vitesse de déplacement, le taux de porosité augmentant, au-dessus d'un seuil inférieur de vitesse de déplacement, au fur et à mesure que la vitesse de déplacement augmente.

La puissance de faisceau laser est de 275 W et une épaisseur de couche est de 50 $\mu$m, le seuil inférieur de vitesse de déplacement étant compris entre 1500 et 6000 mm/s.

A chaque étape de fusion sélective, le taux de porosité des pores au sein du média de filtration est ajusté, pour une puissance de faisceau laser donnée et une épaisseur de couche donnée, en adaptant la densité de puissance de faisceau laser, le taux de porosité augmentant, en dessous d'un seuil supérieur de densité de puissance, au fur et à mesure que la densité de puissance de faisceau laser décroit.

Pour une puissance de faisceau laser de 275 W et une épaisseur de couche de 50 $\mu$m, le seuil supérieur de densité de puissance est compris entre 7 et 20 J/mm$^3$.

A chaque étape de fusion sélective, le taux de porosité des pores au sein du média de filtration est ajusté en adaptant conjointement la puissance de faisceau laser et la vitesse de déplacement, en maintenant un rapport constant à 20% près entre ladite vitesse de déplacement et ladite puissance de faisceau laser, le taux de porosité augmentant au fur et à mesure que la puissance de faisceau laser et la vitesse de déplacement augmentent conjointement.

La densité de puissance de faisceau laser est égale à 13 J/mm$^3$, et au niveau de la fabrication du média de filtration, le rapport entre la vitesse de déplacement exprimée en mm/s et la puissance de faisceau laser exprimée en W, est compris, à chaque étape de fusion sélective, entre 15 et 24.

La phase principale est paramétrée de sorte que la pièce fonctionnelle issue de ladite phase principale comprend un contour de renfort agencé surtout ou partie d'une bordure périphérique du média de filtration.

Le contour de renfort présente, dans le plan de la première face principale et/ou de la deuxième face principale, un chevauchement avec le média de filtration, notamment un chevauchement ayant une largeur de 1 mm à 10 % près.

Au niveau du contour de renfort fabriqué, le taux de porosité est égal à 0.

La densité de puissance de faisceau laser est égale à 13 J/mm$^3$, et au niveau de la fabrication du contour de renfort, le rapport entre la vitesse de déplacement exprimée en mm/s et la puissance de faisceau laser exprimée en W, est compris, à chaque étape de fusion sélective, entre 2,5 et 3,5.

La phase principale est paramétrée de sorte que la pièce fonctionnelle est reliée au plateau de support par un support formé dans le même matériau métallique que la pièce fonctionnelle et obtenu par la même méthode de fabrication additive que la pièce fonctionnelle.

L'invention porte également sur une pièce fonctionnelle obtenue par la mise en œuvre d'un tel procédé de fabrication.

Certains aspects préférés mais non limitatifs de cette pièce fonctionnelle sont les suivants, ces caractéristiques pouvant être prises isolément ou en combinaison.

Le réseau de brins de liaison et les pores présents dans le média de filtration sont tels que pour le fluide traversant le média de filtration dans un sens allant de la première face principale vers la deuxième face principale ou dans un sens allant de la deuxième face principale vers la première face principale, la perméabilité est comprise entre 11 et 200 $l.m^{-2}.s^{-1}$ pour une perte de charge entre les première et deuxième faces principales de 100Pa.

Au niveau du média de filtration, le taux de porosité des pores présents dans le média de filtration est compris entre 10% et 70%.

Le média de filtration est destiné à être utilisé en tant que masque de filtration, ayant une épaisseur, considérée entre les première et deuxième faces principales, comprise entre 600 $\mu$m et 2 mm.

La pièce fonctionnelle a son média de filtration présentant une forme générale de disque, en forme de surface plane ou de surface gauche, ledit disque présentant un diamètre compris entre 8 mm et 120 mm.

## Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :

La figure 1 est un organigramme représentant différentes phases et étapes d'un exemple de procédé de fabrication selon l'invention.

La figure 2 représente schématiquement le principe d'une méthode additive durant l'étape E2.

La figure 3 représente un exemple d'une pluralité de pièces fonctionnelles fabriquées par le procédé de fabrication sur le plateau de support.

La figure 4 est un tableau présentant les paramètres de régalage durant un premier essai dit essai 1.

La figure 5 illustre un exemple pour la pièce fonctionnelle 10 numéro 17 dans le tableau de la figure 4.

La figure 6 représente, pour l'essai 1, le taux de porosité (en %) en ordonnée, en fonction de la vitesse de déplacement V (en mm/s) en abscisse.

La figure 7 représente, pour l'essai 1, le taux de porosité (en %) en ordonnée, en fonction de la densité de puissance de faisceau laser E (en J/mm$^3$) en abscisse.

La figure 8 est un tableau présentant les paramètres de régalage durant un deuxième essai dit essai 2.

La figure 9 est un tableau présentant les paramètres de régalage durant un troisième essai dit essai 3.

La figure 10 est un tableau présentant les paramètres de régalage durant un quatrième essai dit essai 4.

La figure 11 est un tableau présentant les paramètres de régalage durant un cinquième essai dit essai 5.

La figure 12 est un tableau présentant les paramètres de régalage durant un sixième essai dit essai 6.

La figure 13 représente trois configurations de pièces fonctionnelles 10 fabriquées dans l'essai 5, avec des contours de renfort présentant des largeurs différentes d'une configuration à l'autre.

## Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent, au contraire, être combinés entre eux.

L'invention décrite ci-après a pour but de répondre aux problématiques listées précédemment en lien avec l'état de la technique qui a été présenté.

En particulier, un objectif final était de réaliser des pièces fonctionnelles 10 intégralement fabriquée dans un métal, pouvant servir de filtres et des masques, et l'aluminium pouvant de manière non exclusive et à cet effet s'avérer un matériau très intéressant comme matériau de fabrication pour ses raisons de légèreté.

De manière générale, un objet de l'invention concerne d'abord un procédé de fabrication permettant l'obtention d'une pièce fonctionnelle 10 essentiellement formée dans un matériau métallique, ce procédé de fabrication permettant que tout ou partie de la pièce fonctionnelle délimite un média de filtration 12 perméable à un fluide (ce fluide peut être un gaz et/ou un liquide), offrant une porosité anisotrope ou isotrope, le média de filtration 12 délimitant une première face principale 14 et une deuxième face principale 16 pour une circulation préférentielle de ce fluide à travers le média de filtration 12 entre les première et deuxième faces principales 14, 16.

Un objet de l'invention concerne aussi une pièce fonctionnelle 10 obtenue par la mise en œuvre d'un tel procédé de fabrication.

De manière avantageuse, le procédé de fabrication comprend une phase principale P1 consistant en une méthode de fabrication additive en passes FS successives à partir d'un plateau de support 18, chaque passe FS comprenant le dépôt d'au moins une couche du matériau métallique, le matériau métallique déposé au moment du dépôt d'une couche donnée adhérant au matériau métallique d'au moins une couche précédemment déposée. Le dépôt du matériau métallique au niveau de chaque couche est contrôlé à chaque passe FS d'une manière telle que l'empilement du matériau métallique déposé durant les passes FS successives constitue la pièce fonctionnelle 10 recherchée, dont le média de filtration 12 comprend avantageusement, à l'issue de la phase principale P1, un réseau coalescent de brins de liaison interconnectés selon une répartition spatiale en trois dimensions entre les première et deuxième faces principales 14, 16, les brins de liaison de ce réseau délimitant entre eux des pores répartis spatialement au sein du média de filtration 12 dans les trois dimensions entre les première et deuxième faces principales 14, 16.

Pour revenir à la pièce fonctionnelle 10 fabriquée, le réseau de brins de liaison et les pores présents dans le média de filtration 12 peuvent avantageusement être tels que pour le fluide traversant le média de filtration 12 dans un sens allant de la première face principale 14 vers la deuxième face principale 16 ou dans un sens allant de la deuxième face principale 16 vers la première face principale 14, la perméabilité est comprise entre 11 et 200 $l.m^{-2}.s^{-1}$ pour une perte de charge entre les première et deuxième faces principales 14, 16 de 100Pa. Cette perte de charge est fonction en particulier de l'épaisseur du média de filtration 12, du taux de porosité et de la taille des pores.

Ainsi selon un mode de réalisation particulier mais avantageux, le média de filtration 12 qui est destiné à être utilisé en tant que masque de filtration, présente une épaisseur, considérée entre les première et deuxième faces principales 14, 16, qui est comprise entre 600 $\mu$m et 2 mm.

L'une des difficultés était donc de trouver des paramètres de la méthode additive adaptée à obtenir une pièce fonctionnelle 10 de si faible épaisseur (afin de limiter la perte de charge) tout en préservant la fabricabilité et la durabilité, ainsi que la résistance ; ce qui est un enjeu encore plus difficile lorsque l'on vise des faces principales 14, 16 pouvant atteindre entre 8 et 120 mm.

Selon un mode de réalisation avantageux, chaque passe FS comprend une étape E1 de dépôt d'au moins une couche de poudre 20 formée dans le matériau métallique puis une étape E2 de fusion sélective de la poudre précédemment déposée par un apport d'énergie localisé sous l'action d'un faisceau laser 22, la fusion sélective du matériau métallique étant commandée à l'aide d'une base de données informatique préétablie, laquelle base de données informatique commande à chaque passe, par un programme d'ordinateur pilotant un déplacement spatial du faisceau laser 22 par rapport à la poudre 20 de matériau métallique précédemment déposée, au moins l'un des paramètres choisi parmi :

- une trajectoire relative entre le faisceau laser 22 et la poudre 20 de matériau métallique précédemment déposée,
- une vitesse de déplacement « V » correspondant à une vitesse relative entre le faisceau laser 22 et la poudre 20 de matériau métallique précédemment déposée,
- une puissance de faisceau laser « P »,
- une densité de puissance de faisceau laser « E ».

Cette solution d'impression en trois dimensions par dépôts de couches successives puis fusion sélective par faisceau laser selon des trajectoires préétablies et pilotées informatiquement est connue en soi, sous la technologie nommée « MSL » qui est l'acronyme de « Moulage Sélectif au Laser ».

Dans une méthode additive MSL, il est connu que les opérations sont réalisées dans un environnement sous gaz neutre (généralement de l'argon), où notamment une fine couche de poudre métallique d'épaisseur est étalée sur un substrat métallique. Le faisceau laser vient alors apporter à la poudre l'énergie nécessaire à la faire fondre et adhérer aux couches inférieures de façon sélective en fonction de la géométrie de la pièce. La répétition de ces actions permet la fabrication de pièces métalliques de géométrie complexe en trois dimensions. Pour ce faire, il est nécessaire de préparer le fichier de type commande assistée par ordinateur de la pièce en la découpant en tranches de l'épaisseur de la couche de fabrication souhaitée pour en faire un ensemble de plans en deux dimensions. Il faut en plus lui créer des supports de maintien et lui affecter un jeu de paramètre qui permettra de définir les trajectoires du faisceau laser sur la poudre. L'ensemble de ces opérations permet d'obtenir un fichier qui est transmis et pilote la machine de fabrication.

La densité de puissance de faisceau laser E, exprimée en J/mm$^3$, se définit par la formule mathématique suivante :

[Math 1]

$$E = \frac{P}{V.HD.e}$$

où :

P est la puissance de faisceau laser, exprimée en Watt (W),
V est la vitesse de déplacement, exprimée en mm/s,
HD est une valeur de décalage entre deux vecteurs adjacents d'application laser, exprimé en mm,
e est l'épaisseur de couche, exprimée en mm,
E est la densité de puissance de faisceau laser.

Ainsi à chaque étape E2 de fusion sélective, la trajectoire adoptée par le faisceau laser 22 comprend des vecteurs de déplacement où les vecteurs de déplacement sont décalés spatialement deux à deux suivant la valeur de décalage HD, cette valeur ayant une incidence sur la pièce fonctionnelle 10 fabriquée.

Il n'en demeure pas moins que d'autres méthodes de fabrication additive de matériaux métalliques pourraient éventuellement être envisagées, comme par exemple la technologie nommée « FSL » qui est l'acronyme de « Frittage Sélectif par Laser », ou par « Projection de Liant », ou par « Fusion par faisceau d'électrons », etc.

La Demanderesse a travaillé au développement de telles pièces fonctionnelles, et a réalisé une série d'essais détaillés ci-après afin de déterminer des paramètres avantageux à privilégier pour le cas particulier de la méthode additive MSL présentée ci-avant, qui était particulièrement prometteuse, sans que cela ne soit limitatif.

On comprend que de nombreux paramètres peuvent en effet avoir une influence directe sur la qualité de fabrication de la pièce fonctionnelle, en particulier la puissance de faisceau laser P, la vitesse de déplacement V, la valeur de décalage HD entre deux vecteurs adjacents d'application laser, l'épaisseur e de couche, la densité de puissance de faisceau laser E, mais aussi éventuellement un paramètre connu sous le nom « Beam Compensation » qui une valeur qui compense la largeur de bain de fusion par un décalage par rapport au contour réel de la pièce, les paramètres liés à la stratégie d'hachurage (avec des emplacements d'interruption de fusion et/ou éventuellement avec des zones de stratégies d'hachurage différentes et/ou avec des rotations d'une couche à l'autre), des paramètres connus sous les noms « Limit rotation » et « Limitation window » qui dépendent d'une rotation limite d'une couche à l'autre en fonction du sens de flux de gaz, un paramètre connu sous le nom « Border » qui définit un ou des contours entre le bord de la pièce et le hachurage, un paramètre « Fill contour » permettant de définir au moins un contour supplémentaire entre le contour et le hachurage avec un autre paramétrage.

Le matériau métallique dans lequel la pièce fonctionnelle 10 est essentiellement constituée comprend au moins l'un des matériaux suivants sous forme pure, d'alliage ou d'oxyde : aluminium, acier inoxydable, nickel, cobalt, fer, cuivre, palladium, titane, tungstène, argent, platine.

Ainsi à titre d'exemple tous les essais ont été réalisés en utilisant une poudre d'acier inoxydable 316L commercialisée par SLM Solutions ®. Le matériau métallique peut tout autant être en particulier de l'aluminium ou un alliage d'aluminium, qui présentent l'avantage d'être légers et thermiquement stables aux températures de désinfection. Le matériau pourrait être choisi, sinon, dans la liste prévue au paragraphe précédent.

La phase P0 de préparation de la poudre de matériau métallique est identique pour tous les plateaux de support 18 des différents essais. La poudre neuve est tamisée avec un tamis avec une maille de 200 $\mu$m pour décompacter la poudre. Elle est ensuite étuvée durant une période d'au moins 24h à 63°C afin d'obtenir un taux d'humidité relative inférieur à 10%. Dès lors, la poudre est prête à être mis dans la machine pour la fabrication. Après chaque fabrication, la poudre est recyclée en la tamisant avec un tamis de 50 $\mu$m et en l'étuvant à 63°C durant plus de 24 h.

Certains des essais ont été réalisés en vue de la fabrication d'une pièce fonctionnelle 10 se présentant sous la forme d'un disque dont la partie centrale est le média de filtration 12, lui-même de forme circulaire, pour des diamètres allant de 30 mm à 96 mm. Le diamètre de 96 mm correspond à un média de filtration 12 circulaire adaptable aux masques à cartouches déjà développés dans le cadre de crise sanitaire. D'autres essais ont été réalisés de sorte à fabriquer directement un masque de protection.

De manière plus générale au-delà des seuls essais, le média de filtration 12 peut présenter avantageusement une forme générale de disque, en forme de surface plane ou de surface gauche, où ce disque présente un diamètre compris entre 8 mm et 120 mm.

Dans le cas d'un média de filtration 12 en forme de disque, il est compris que les première et deuxième faces principales 14, 16 sont alors constituées par les faces circulaires du disque.

Avantageusement pour des raisons de fabrication, de tenue mécanique et de qualité de filtration tout en limitant les pertes de charge, l'épaisseur du média de filtration 12, prise entre les première et deuxième faces principales 14, 16, est comprise entre 400 $\mu$m et 500 mm.

Pour tous les essais, il a été décidé de privilégier le fait que le média de filtration 12 obtenu durant la phase principale P1 est contenu dans un plan principal formant un angle compris entre 30° et 90° à 5° près avec le plateau de support 18. Cette caractéristique a pour avantage de limiter la taille du talon (le talon étant la partie de la pièce fonctionnelle 10 qui est en contact avec le support 24 décrit plus loin), ce qui implique avantageusement une limitation des usinages nécessaires pour séparer la pièce fonctionnelle 10 fabriquée et le support 24.

Pour les essais, il a aussi été décidé de travailler sans aucun contour et sans aucune stratégie de balayage, et de les réaliser de sorte qu'à chaque passe FS, le plateau de support 18 soit chauffé à une température comprise entre la température ambiante et 250°C, notamment égale à 200°C à 10% près.

Selon un mode de réalisation particulier, chaque couche de poudre présente une épaisseur comprise entre 20 $\mu$m et 100 $\mu$m. Ainsi, pour tous les essais, il a été privilégié une épaisseur de couche e de 50 $\mu$m, mais certaines pièces fonctionnelles 10 ont été fabriquées en utilisant une épaisseur de couche e de 30 $\mu$m ou 100 $\mu$m.

Selon un mode de réalisation particulier, la phase principale P1 est paramétrée de sorte que la pièce fonctionnelle 10 est reliée au plateau de support 18 par un support 24 formé dans le même matériau métallique que la pièce fonctionnelle 10 et obtenu par la même méthode de fabrication additive que la pièce fonctionnelle 10. Ainsi durant la fabrication, la liaison entre le plateau de support 18 et chaque pièce fonctionnelle 10 en forme de disque a été réalisée dans les essais sous la forme d'un support 24, dont des caractéristiques seront détaillées plus loin. Ce support 24 est réalisé lui aussi avec la même méthode additive, même s'il est possible de prévoir des paramètres de fabrication distincts entre ceux utilisés pour la fabrication du support 24 et ceux utilisés pour la fabrication de la pièce fonctionnelle 10, en particulier pour le média de filtration 12.

## Essai 1

Cet essai consistait à fabriquer 60 pièces fonctionnelles 10 sous forme de disque ayant un diamètre de 30 mm, de 3 mm d'épaisseur, l'angle formé entre le plateau de support 18 et chaque pièce fonctionnelle étant de 90° à 5° près. L'épaisseur e de chaque couche de matériau déposée était de 50 $\mu$m.

La figure 4 représente, pour les 60 pièces fonctionnelles 10 fabriquées, la valeur respective qui a été utilisée pour P, V, HD, e, E.

Le « Beam compensation » était de 0,08 mm, le nombre de « Border » était 2 pour une valeur de scannage de 100 W pour une vitesse de 300 mm/s, le nombre de « Fill contour » était 1 pour une valeur de scannage de 150 W pour une vitesse de 400 mm/s, l'angle initial était de 10° et l'incrément d'angle d'une couche à l'autre était 33°, la « Limit Rotation » était activée et la « Limitation Window » était 90°, le faisceau laser était appliqué à chaque couche de matériau métallique déposée, et le scannage du faisceau laser au niveau des supports 24 était paramétré à une puissance P égale à 150 W pour une vitesse de déplacement V égale à 700 mm/s.

En conséquence, pour une puissance laser P fixe donnée, il était possible d'étudier l'influence de l'épaisseur e de couche, l'influence de HD et l'influence de l'augmentation de V.

Visuellement, dès la sortie de la machine de fabrication, il y avait de grosses différences entre les pièces fonctionnelles 10 : celles fabriquées avec des vitesses très rapides (au-dessus de 7000 mm/s) étaient plus friables.

Après le retrait des pièces fonctionnelles 10 fabriquées hors du plateau de support 18, elles ont été aspirées (sauf les plus friables), soufflées avec de l'air comprimé et sont restées 15 minutes sous des ultrasons à une température de 40°C pour essayer d'éliminer le maximum de poudre non fondue ou juste frittée par rapport aux pièces fonctionnelles 10 pouvant se détacher facilement. Les médias de filtration 12 ont alors été découpés, enrobés et passés à la binoculaire. La figure 5 illustre un exemple pour la pièce fonctionnelle 10 repérée sous le numéro 17 dans le tableau de la figure 4. Il est possible d'apercevoir dans le média de filtration 12 le réseau coalescent de brins de liaison interconnectés selon une répartition spatiale en trois dimensions, les brins de liaison du réseau délimitant entre eux des pores répartis spatialement au sein du média de filtration 12.

La figure 6 représente le taux de porosité (en %) en ordonnée, en fonction de la vitesse de déplacement V (en mm/s) en abscisse. La courbe située au-dessus correspond aux points établis pour une valeur de HD de 0,12 mm tandis que la courbe située en dessous correspond aux points établis pour une valeur de HD de 0,10 mm. Ainsi, à chaque étape E2 de fusion sélective, le taux de porosité des pores au sein du média de filtration 12 peut être ajusté, pour une puissance de faisceau laser P donnée et une épaisseur e de couche donnée, en adaptant la vitesse de déplacement V, le taux de porosité augmentant, au-dessus d'un seuil inférieur de vitesse de déplacement, au fur et à mesure que la vitesse de déplacement V augmente. Sur la figure 6, il est montré que la puissance de faisceau laser P étant égale à 275 W et l'épaisseur e de couche étant égale à 50 $\mu$m, le seuil inférieur de vitesse de déplacement est compris entre 1500 et 2000 mm/s. Les deux points entourés sur les deux courbes et à partir desquels le taux de porosité croît en même temps que la vitesse de déplacement V correspondent à une densité de puissance de faisceau laser E de 27 J/mm$^3$. Plus généralement, le seuil inférieur de vitesse de déplacement est compris entre 1500 et 6000 mm/s.

La figure 7 représente le taux de porosité (en %) en ordonnée, en fonction de la densité de puissance de faisceau laser E (en J/mm$^3$) en abscisse. La courbe située au-dessus correspond aux points établis pour une valeur de HD de 0,12 mm tandis que la courbe située en dessous correspond aux points établis pour une valeur de HD de 0,10 mm. Ainsi, à chaque étape E2 de fusion sélective, le taux de porosité des pores au sein du média de filtration 12 peut être ajusté, pour une puissance de faisceau laser P donnée et une épaisseur e de couche donnée, en adaptant la densité de puissance de faisceau laser E, le taux de porosité augmentant, en dessous d'un seuil supérieur de densité de puissance, au fur et à mesure que la densité de puissance de faisceau laser E décroit. Sur la figure 7, il est montré que la puissance de faisceau laser étant de 275 W et l'épaisseur e étant de 50 μm, le seuil supérieur de densité de puissance est compris entre 7 et 20 J/mm$^3$. Les deux points sur les deux courbes à partir desquels le taux de porosité croît en même temps que la densité de puissance de faisceau laser E décroit correspondent à une densité de puissance de faisceau laser E de 27 J/mm$^3$.

Enfin, l'essai 1 a montré que pour un média de filtration 12 formant un angle de 90° à 5° près par rapport au plateau de support 18, il est préférable que la puissance de faisceau laser P utilisée à chaque passe durant l'étape E2 de fusion sélective, au niveau du média de filtration 12, soit comprise entre 30% et 90% d'une valeur de puissance de faisceau laser permettant l'obtention d'un bloc non poreux dépourvu de pores formé dans le même matériau métallique. Au niveau du média de filtration 12, le taux de porosité des pores présents dans le média de filtration 12 était alors compris entre 10% et 70%.

## Essai 2

Cet essai 2 consistait à fabriquer 37 pièces fonctionnelles 10 sous forme de disque ayant un diamètre de 30 mm, de 3 mm d'épaisseur, l'angle formé entre le plateau de support 18 et chaque pièce fonctionnelle étant de 90° à 5° près. L'épaisseur de chaque couche de matériau déposée était de 30 μm.

La figure 8 représente, pour les 37 pièces fonctionnelles 10 fabriquées, la valeur respective qui a été utilisée pour P, V, HD, e, E.

Le « Beam compensation » était de 0,08 mm, le nombre de « Border » était 1 pour une valeur de scannage de 100 W pour une vitesse de 550 mm/s, le nombre de « Fill contour » était 0 pour une valeur de scannage de 150 W pour une vitesse de 500 mm/s, l'angle initial était de 10° et l'incrément d'angle d'une couche à l'autre était 33°, la « Limit Rotation » était activée et la « Limitation Window » était 90°, le faisceau laser était appliqué toutes les deux couches de matériau métallique déposées (soit pour toute tranche déposée de 60 μm), et le scannage du faisceau laser au niveau des supports 24 était paramétré à une puissance de 200 W pour une vitesse de déplacement de 875 mm/s.

Sur le même plateau de support 18, trois pièces fonctionnelles 10 ayant chacune directement la forme d'un masque de filtration prêt à être porté sur la tête d'un utilisateur, ont été fabriquées en même temps et par les mêmes méthodes et les mêmes paramétrages.

## Essai 3

L'essai 3 consistait à élaborer un essai identique à l'essai 1, mais en fixant des valeurs de P plus élevées, à savoir 300, 325, 350 et 375 W, pour des valeurs de HD de 100 et 120 μm. Il a été cherché de maintenir les valeurs de E par rapport à l'essai 1, en adaptant en conséquence les valeurs de la vitesse de déplacement V, notamment devenant supérieures à 3500 mm/s.

La figure 9 représente, pour les pièces fonctionnelles 10 fabriquées, la valeur respective qui a été utilisée pour P, V, HD, e, E.

Dans le même essai 3, sur le même plateau de support 18, il a été fabriqué des pièces fonctionnelles 10 en forme de disque présentant un diamètre de 60 mm, avec une épaisseur de 0,6 mm, ainsi qu'un masque de filtration de 1 mm d'épaisseur avec un réglage des paramètres avec P égale à 275 W et une vitesse de déplacement V égale à 3501 mm/s pour une valeur de HD de 100 μm. Le faisceau laser était appliqué toutes les deux couches de matériau métallique déposées (soit pour toute tranche déposée de 100 μm).

Il a ainsi pu être déterminé, après analyse des pièces fonctionnelles 10 ainsi fabriquées, qu'à chaque étape E2 de fusion sélective, le taux de porosité des pores au sein du média de filtration 12 pouvait être ajusté en adaptant conjointement la puissance de faisceau laser P et la vitesse de déplacement V, en prenant soin de maintenir un rapport constant (à 20% près) entre la vitesse de déplacement V et la puissance de faisceau laser P, le taux de porosité augmentant au fur et à mesure que la puissance de faisceau laser P et la vitesse de déplacement V augmentent conjointement. Ceci est apparu vrai indépendamment de la valeur de HD.

De plus, pour une densité de puissance E égale à 13 J/mm$^3$, au niveau de la fabrication du média de filtration 12, le rapport entre la vitesse de déplacement V exprimée en mm/s et la puissance de faisceau laser P exprimée en W, était compris, à chaque étape E2 de fusion sélective, entre 15 et 24.

Il a aussi été constaté que pour les pièces fonctionnelles 10 en forme de disque de 60 mm de diamètre, celles-ci présentaient des ondulations à partir de la mi-hauteur, probablement dues à des problèmes de repérage et/ou un problème de tenue par les supports 24 et/ou de contraintes résiduelles.

## Essai 4

Cet essai 4 avait pour objectif d'identifier les triplets de valeurs des paramètres P, V et HD permettant d'obtenir les critères de filtration attendus en terme de perméabilité à l'air et au liquide et en terme d'efficacité à différentes tailles de particules.

Cet essai 4 consistait à fabriquer des pièces fonctionnelles 10 sous forme de disque ayant un diamètre de 96 mm, 8 d'entre eux ayant une épaisseur de 0,6 mm et les 20 restants ayant une épaisseur de 1 mm, l'angle formé entre le plateau de support 18 et chaque pièce fonctionnelle 10 étant de 90° à 5° près. L'épaisseur e de chaque couche de matériau déposée était de 50 $\mu$m.

La figure 10 représente, pour les pièces fonctionnelles 10 ainsi fabriquées, la valeur respective qui a été utilisée pour P, V, HD, e, E. En particulier pour une densité de puissance E égale à 13 J/mm3, au niveau de la fabrication du média de filtration 12, le rapport entre la vitesse de déplacement V exprimée en mm/s et la puissance de faisceau laser P exprimée en W, est compris, à chaque étape E2 de fusion sélective, entre 15 et 24.

Il a été constaté que si toutes les pièces fonctionnelles 10 ont été fabriquées au moins partiellement durant l'essai 4, elles présentaient toutes de nombreuses déformations. Les pièces fonctionnelles 10 ayant une épaisseur de 0,6 mm n'ont pas pu être fabriquées en intégralité car, en raison de leur épaisseur trop faible en regard de leur diamètre, des déformations et des ondulations apparaissaient à partir de quelques centimètres considérés depuis le plateau de support 18. La même problématique apparaissait pour les pièces fonctionnelles 10 dont l'épaisseur est 1 mm, même si cela était moins prononcé.

## Essai 5

Cet essai 5 a été élaboré afin de répondre aux problématiques de déformations et d'ondulations apparues à l'essai 4.

A cet effet, les pièces fonctionnelles 10 à fabriquer ont été modifiées de sorte à présenter un contour de renfort 26. Plus précisément, la phase principale P1 a été paramétrée de sorte que la pièce fonctionnelle 10 issue de la phase principale P1 comprenne ce contour de renfort 26 agencé surtout ou partie de la bordure périphérique du média de filtration 12, c'est-à-dire dans le cas particulier d'un média de filtration 12 en forme de disque comme c'était le cas dans l'essai 4, sur la bordure périphérique de ce disque.

Dans cet essai, et en référence à la figure 13, certaines pièces fonctionnelles 10 présentaient un média de filtration 12 en forme de disque ayant une épaisseur de 0,6 mm et le contour de renfort 26 présentait, dans le plan de la première face principale 14 et/ou de la deuxième face principale 16, une largeur de 8 mm. D'autres pièces fonctionnelles 10 présentaient un média de filtration 12 en forme de disque ayant une épaisseur de 1 mm et le contour de renfort 26 présentait, dans le plan de la première face principale 14 et/ou de la deuxième face principale 16, une largeur de 5 mm. D'autres pièces fonctionnelles 10 présentaient encore un média de filtration 12 en forme de disque ayant une épaisseur de 1,5 mm et le contour de renfort 26 présentait, dans le plan de la première face principale 14 et/ou de la deuxième face principale 16, une largeur de 3 mm.

Les paramètres utilisés étaient tels qu'au niveau du contour de renfort 26 fabriqué, le taux de porosité était égal à 0, en prévoyant par exemple une puissance P égale à 100 W et une vitesse V égale à 300 mm/s. Le contour de renfort 26 était donc beaucoup plus dense qu'au niveau du média de filtration 12. Plus généralement, la densité de puissance de faisceau laser E est égale à 13 J/mm$^3$, et au niveau de la fabrication du contour de renfort 26, le rapport entre la vitesse de déplacement V exprimée en mm/s et la puissance de faisceau laser P exprimée en W, était compris, à chaque étape E2 de fusion sélective, entre 2,5 et 3,5.

La figure 11 représente, pour les pièces fonctionnelles 10 ainsi fabriquées, la valeur respective qui a été utilisée pour P, V, HD, e, E au niveau du média de filtration 12. En particulier pour une densité de puissance de faisceau laser E égale à 13 J/mm$^3$, au niveau de la fabrication du média de filtration 12, le rapport entre la vitesse de déplacement V exprimée en mm/s et la puissance de faisceau laser P exprimée en W, est compris, à chaque étape E2 de fusion sélective, entre 15 et 24.

Les paramètres utilisés pour la fabrication des supports 24 étaient identiques que ceux utilisés dans l'essai 4.

Il a pu être constaté la présence d'un décrochement sous forme d'une absence de contact entre le contour de renfort 26 et le média de filtration 12 sur certaines zones.

Par contre, il a pu être constaté que les ondulations étaient nettement moins prononcées et/ou apparaissaient à une hauteur plus élevée que dans l'essai 4 en raison de la présence du contour de renfort 26. Seules les pièces fonctionnelles 10 présentant une épaisseur de 1,5 mm ne présentaient presque aucune déformation, et ce quels que soient les paramètres utilisés.

## Essai 6

Cet essai 6 reprenait l'essai 5 en conservant les pièces fonctionnelles 10 de 1 mm d'épaisseur uniquement et des pièces fonctionnelles 10 fabriquées avec d'autres combinaisons de paramètres.

La figure 12 représente, pour les pièces fonctionnelles 10 ainsi fabriquées, la valeur respective qui a été utilisée pour P, V, HD, e, E au niveau du média de filtration 12.

Les paramètres utilisés pour la fabrication des supports 24 étaient différents de ceux utilisés dans l'essai 5. Dans l'essai 5, chaque support 24 comprenait un ensemble de lignes de liaison reliant la pièce fonctionnelle 10 supportée et le plateau de support 18. Dans l'essai 6, chaque support 24 se présentait sous la forme d'un bloc.

Par ailleurs, afin de répondre aux problématiques de décrochements entre le contour de renfort 26 et le média de filtration 12 apparues à l'essai 5, le contour de renfort 26 présentait, dans le plan de la première face principale 14 et/ou de la deuxième face principale 16, un chevauchement avec le média de filtration 12 ayant une largeur de 0,4 mm.

Grâce à la présence du chevauchement de 0,4 mm entre le contour de renfort 26 et le média de filtration 12, il n'est apparu aucun décrochement entre ces deux parties. Toutefois, des déformations restaient toujours présentes.

Par ailleurs, en raison de la modification de la forme des supports 24, les ondulations des médias de filtration 12 ont été considérablement réduites et apparaissent à une hauteur (comptée depuis le plateau 18) nettement plus élevée. En conséquence, les pièces fonctionnelles 10 manquaient encore de stabilité durant la fabrication, mais nettement moins que dans l'essai 5.

Enfin, les médias de filtration 12 fabriqués en utilisant une valeur de P égale à 275 W, une valeur de HD égale à 0,2 mm et une vitesse V égale à 3501 mm/s présentaient le meilleur aspect visuel, même si le média de filtration avait une forte propension au déchirement.

## Essai 7

Dans cet essai 7, différents paramètres pour les supports 24 ont été testés, en conservant une puissance de faisceau laser P de 275 W, une vitesse de déplacement V de 2000 mm/s et une valeur de HD de 0,12 $\mu$m. De plus, différentes configurations de supports 24 ont été testés, en variant entre une forme de bloc et une forme arborescente avec des brins de support latéraux soutenant la pièce fonctionnelle 10 à une certaine hauteur de celle-ci, et pas uniquement dans sa partie inférieure. Pour certains supports 24 en forme de bloc, il était prévu que le bloc soit renforcé à sa périphérie par une augmentation de son épaisseur à une valeur de 0,7 mm tandis qu'au centre l'épaisseur était de 0,5 mm.

De plus, le contour de renfort 26 présentait, dans le plan de la première face principale 14 et/ou de la deuxième face principale 16, un chevauchement avec le média de filtration 12 ayant une largeur de 2 mm, donc supérieure à celle du chevauchement présent dans l'essai 6.

Dans cet essai 7, il a été également étudié, pour un diamètre des disques fabriqués égal à 96 mm, l'influence du fait de faire varier la valeur de HD entre 120, 150, 180 et 200 $\mu$m, pour une épaisseur du média de filtration 12 égale à 1,5 mm.

Enfin, il a été fabriqué des pièces fonctionnelles 10 en forme de disque dont le diamètre était égal à 50 mm, mais en faisant varier la valeur du paramètre de rotation entre 5° et 90° avec une « Limitation window » de 90°.

Il a ainsi été constaté que le taux de porosité des pores au sein du média de filtration 12 pouvait être ajusté, pour une puissance de faisceau laser P donnée et une épaisseur e de couche donnée, en adaptant la valeur de décalage HD, le taux de porosité augmentant au fur et à mesure que la valeur de décalage HD augmentait.

Concernant le paramètre de rotation avec une « Limitation window » de 90°, le taux de porosité était constant en restant compris entre 35% et 36%, sauf pour une valeur de rotation de 5° et 66° où le taux de porosité était supérieur, devenant alors compris entre 39% et 40%.

Par ailleurs, il a été déterminé que la présence de supports 24 de forme arborescente était superfétatoire par rapport aux supports 24 sous forme de blocs renforcés en périphérie.

Enfin, la présence du chevauchement ayant une largeur de 1 mm à 10% près est particulièrement avantageuse pour éviter les déformations.

## Essai 8

Cet essai 8 était identique à l'essai 7, sauf que les supports 24 sous forme d'un bloc d'une épaisseur de 0,5 mm et renforcé en périphérie par une augmentation de l'épaisseur à 0,7 mm, ont été remplacés par des supports 24 sous forme d'un bloc d'une épaisseur de 0,4 mm et renforcé en périphérie par une augmentation de l'épaisseur à 0,6 mm.

Il a pu être constaté que les pièces fonctionnelles 10 fabriquées présentaient des déformations sur leur partie haute, ce qui n'était pas le cas dans l'essai 7. Ainsi, les supports 24 s'avéraient présenter une tenue mécanique pour soutenir les pièces fonctionnelles 10 fabriquées par-dessus eux.

## Revendications

1. Procédé de fabrication permettant l'obtention d'une pièce fonctionnelle (10) essentiellement formée dans un matériau métallique, tout ou partie de la pièce fonctionnelle (10) délimitant un média de filtration (12) perméable à un fluide et délimitant des première et deuxième faces principales (14, 16) pour une circulation préférentielle dudit gaz à travers le média de filtration (12) entre les première et deuxième faces principales (14, 16), le procédé de fabrication comprenant une phase principale (P1) consistant en une méthode de fabrication additive en passes (FS) successives à partir d'un plateau de support (18), chaque passe (FS) comprenant le dépôt d'au moins une couche dudit matériau métallique, le matériau déposé adhérant au matériau métallique d'au moins une couche précédemment déposée, le dépôt du matériau métallique au niveau de chaque couche étant contrôlé à chaque passe (FS) d'une manière telle que l'empilement du matériau métallique déposé durant lesdites passes (FS) successives constitue ladite pièce fonctionnelle (10), dont le média de filtration (12) comprend un réseau coalescent de brins de liaison interconnectés selon une répartition spatiale en trois dimensions entre les première et deuxième faces principales (14, 16), les brins de liaison dudit réseau délimitant entre eux des pores répartis spatialement au sein du média de filtration (12) dans les trois dimensions entre les première et deuxième faces principales (14, 16).

**2.** Procédé de fabrication selon la revendication 1, dans lequel le média de filtration (12) obtenu durant la phase principale (P1) est contenu dans un plan principal formant un angle compris entre 30° et 90° avec le plateau de support (18).

**3.** Procédé de fabrication selon l'une quelconque des revendications 1 ou 2, dans lequel l'épaisseur du média de filtration (12), prise entre les première et deuxième faces principales (14, 16), est comprise entre 400 $\mu$m et 500 mm.

**4.** Procédé de fabrication selon l'une des revendications 1 à 3, dans lequel le matériau métallique dans lequel la pièce fonctionnelle (10) est essentiellement constituée comprend au moins l'un des matériaux suivants sous forme pure, d'alliage ou d'oxyde : aluminium, acier inoxydable, nickel, cobalt, fer, cuivre, palladium, titane, tungstène, argent, platine.

**5.** Procédé de fabrication selon l'une quelconque des revendications 1 à 4, dans lequel à chaque passe (FS), le plateau de support (18) est chauffé à une température comprise entre la température ambiante et 250°C, notamment égale à 200°C à 10% près.

**6.** Procédé de fabrication selon l'une quelconque des revendications 1 à 5, dans lequel chaque passe (FS) comprend une étape (E1) de dépôt d'au moins une couche de poudre (20) formée dans ledit matériau métallique puis une étape (E2) de fusion sélective de la poudre précédemment déposée par un apport d'énergie localisé sous l'action d'un faisceau laser (22), la fusion sélective du matériau métallique étant commandée à l'aide d'une base de données informatique préétablie, laquelle base de données informatique commande à chaque passe (FS), par un programme d'ordinateur pilotant un déplacement spatial du faisceau laser (22) par rapport à la poudre de matériau métallique précédemment déposée, au moins l'un des paramètres choisi parmi : une trajectoire relative entre le faisceau laser (22) et la poudre précédemment déposée, une vitesse de déplacement (V) correspondant à une vitesse relative entre le faisceau laser (22) et la poudre précédemment déposée, une puissance de faisceau laser (P), une densité de puissance de faisceau laser (E).

**7.** Procédé de fabrication selon la revendication 6, dans lequel chaque couche de poudre (20) présente une épaisseur (e) comprise entre 20 $\mu$m et 100 $\mu$m.

**8.** Procédé de fabrication selon l'une quelconque des revendications 6 ou 7, dans lequel à chaque étape (E2) de fusion sélective, la trajectoire adoptée par le faisceau laser (22) comprend des vecteurs de déplacement où les vecteurs de déplacement sont décalés spatialement deux à deux suivant une valeur de décalage (HD) et dans lequel le taux de porosité des pores au sein du média de filtration (12) est ajusté, pour une puissance de faisceau laser (P) donnée et une épaisseur (e) de couche donnée, en adaptant ladite valeur de décalage (HD), le taux de porosité augmentant au fur et à mesure que la valeur de décalage (HD) augmente.

**9.** Procédé de fabrication selon l'une quelconque des revendications 6 à 8, dans lequel la puissance de faisceau laser (P) utilisée à chaque passe (FS) durant l'étape (E2) de fusion sélective, au niveau du média de filtration (12), est comprise entre 30% et 90% d'une valeur de puissance de faisceau laser (P) permettant l'obtention d'un bloc non poreux dépourvu de pores formé dans ledit matériau métallique.

**10.** Procédé de fabrication selon l'une quelconque des revendications 6 à 9, dans lequel à chaque étape (E2) de fusion sélective, le taux de porosité des pores au sein du média de filtration (12) est ajusté, pour une puissance de faisceau laser (P) donnée et une épaisseur (e) de couche donnée, en adaptant la vitesse de déplacement (V), le taux de porosité augmentant, au-dessus d'un seuil inférieur de vitesse de déplacement, au fur et à mesure que la vitesse de déplacement (V) augmente.

**11.** Procédé de fabrication selon la revendication 10, dans lequel la puissance de faisceau laser (P) est de 275 W et une épaisseur (e) de couche est de 50 $\mu$m, le seuil inférieur de vitesse de déplacement étant compris entre 1500 et 6000 mm/s.

**12.** Procédé de fabrication selon l'une quelconque des revendications 6 à 11, dans lequel à chaque étape (E2) de fusion sélective, le taux de porosité des pores au sein du média de filtration (12) est ajusté, pour une puissance de faisceau laser (P) donnée et une épaisseur (e) de couche donnée, en adaptant la densité de puissance de faisceau laser (E), le taux de porosité augmentant, en dessous d'un seuil supérieur de densité de puissance, au fur et à mesure que la densité de puissance de faisceau laser (E) décroit.

**13.** Procédé de fabrication selon la revendication 12, dans lequel la puissance de faisceau laser (P) est de 275 W et une épaisseur (e) de couche est de 50 µm, le seuil supérieur de densité de puissance étant compris entre 7 et 20 $J/mm^3$.

**14.** Procédé de fabrication selon l'une quelconque des revendications 1 à 13, dans lequel la phase principale (P1) est paramétrée de sorte que la pièce fonctionnelle (10) issue de ladite phase principale (P1) comprend un contour de renfort (26) agencé sur tout ou partie d'une bordure périphérique du média de filtration (12).

**15.** Procédé de fabrication selon la revendication 14, dans lequel le contour de renfort (26) présente, dans le plan de la première face principale (14) et/ou de la deuxième face principale (16), un chevauchement avec le média de filtration (12), notamment un chevauchement ayant une largeur de 1 mm à 10 % près.

**16.** Procédé de fabrication selon l'une quelconque des revendications 14 ou 15, dans lequel au niveau du contour de renfort (26) fabriqué, le taux de porosité est égal à 0.

**17.** Procédé de fabrication selon l'une quelconque des revendications 14 à 16 et selon l'une quelconque des revendications 6 à 13, dans lequel la densité de puissance de faisceau laser (E) est égale à 13 $J/mm^3$, et dans lequel au niveau de la fabrication du contour de renfort (26), le rapport entre la vitesse de déplacement (V) exprimée en mm/s et la puissance de faisceau laser (P) exprimée en W, est compris, à chaque étape (E2) de fusion sélective, entre 2,5 et 3,5.

**18.** Procédé de fabrication selon l'une quelconque des revendications 1 à 17, dans lequel la phase principale (P1) est paramétrée de sorte que la pièce fonctionnelle (10) est reliée au plateau de support (18) par un support (24) formé dans le même matériau métallique que la pièce fonctionnelle (10) et obtenu par la même méthode de fabrication additive que la pièce fonctionnelle (10).

**19.** Pièce fonctionnelle (10) obtenue par la mise en œuvre d'un procédé de fabrication selon l'une quelconque des revendications 1 à 18.

**20.** Pièce fonctionnelle (10) selon la revendication 19, dans laquelle le réseau de brins de liaison et les pores présents dans le média de filtration (12) sont tels que pour le fluide traversant le média de filtration (12) dans un sens allant de la première face principale (14) vers la deuxième face principale (16) ou dans un sens allant de la deuxième face principale (16) vers la première face principale (14), la perméabilité est comprise entre 11 et 200 $l.m^{-2}.s^{-1}$ pour une perte de charge entre les première et deuxième faces principales (14, 16) de 100Pa.

**21.** Pièce fonctionnelle (10) selon l'une quelconque des revendications 19 ou 20, dans laquelle au niveau du média de filtration (12), le taux de porosité des pores présents dans le média de filtration (12) est compris entre 10% et 70%.

**22.** Pièce fonctionnelle (10) selon l'une quelconque des revendications 19 à 21, dans laquelle le média de filtration (12) est destiné à être utilisé en tant que masque de filtration (12), ayant une épaisseur, considérée entre les première et deuxième faces principales (14, 16), comprise entre 600 µm et 2 mm.

**23.** Pièce fonctionnelle (10) selon la revendication 22, dont le média de filtration (12) présente une forme générale de disque, en forme de surface plane ou de surface gauche, ledit disque présentant un diamètre compris entre 8 mm et 120 mm.

[Fig. 1]

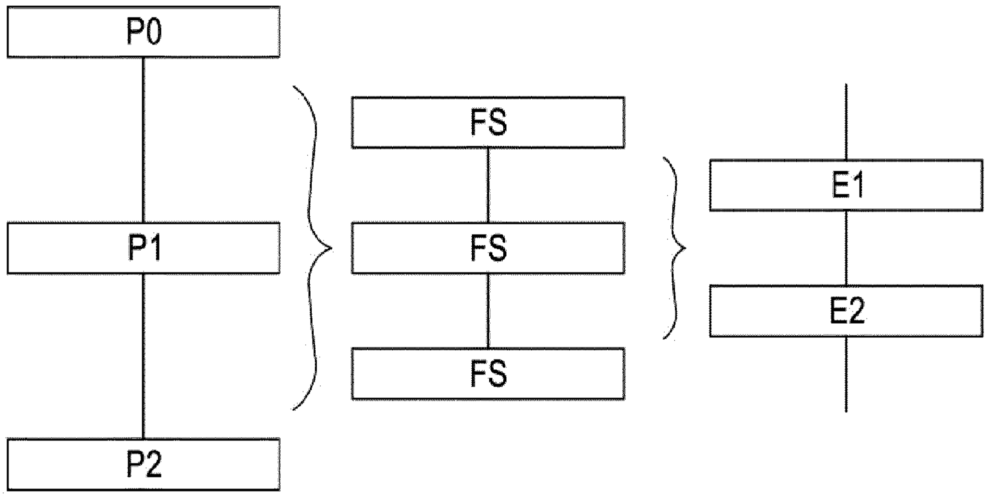


[Fig. 2]

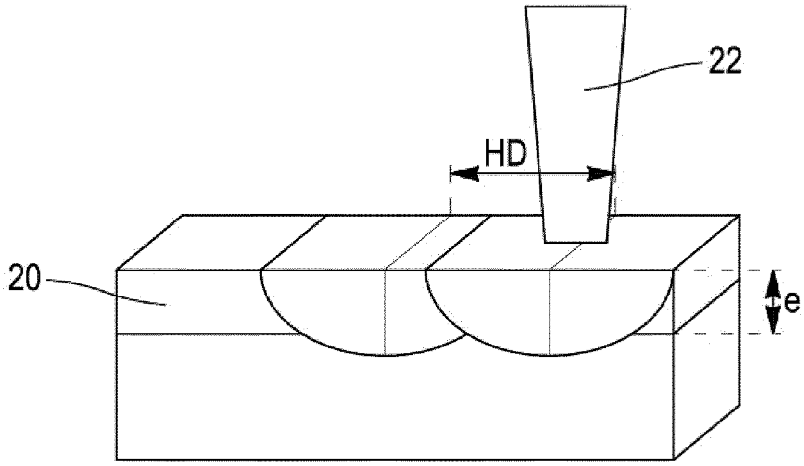


[Fig. 3]

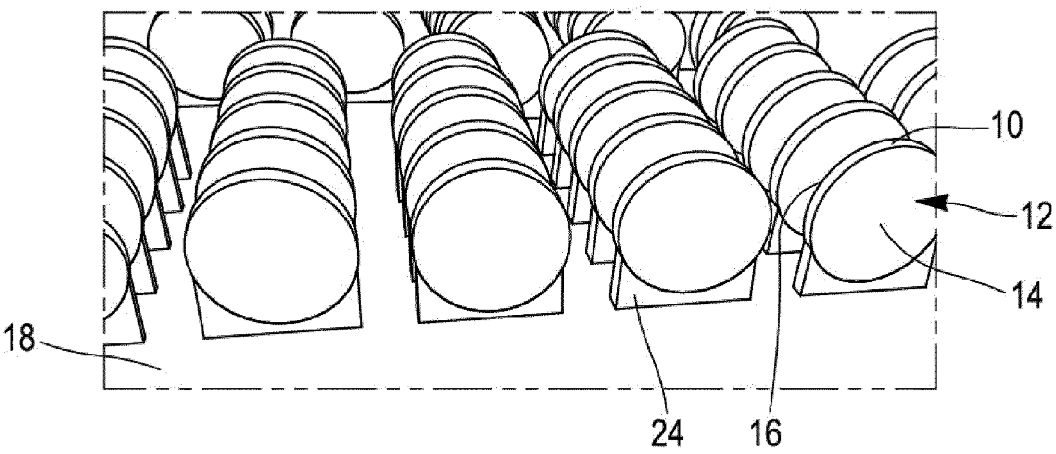

[Fig. 4]

| Couche 50µm | | | | | |
|---|---|---|---|---|---|
| n° | Puissance (W) | Vitesse (mm/s) | HD (mm) | Epaisseur (mm) | Densité (J/mm²) |
| 1 | 96 | 700 | 0.12 | 0.05 | 22.86 |
| 2 | 83 | 700 | 0.12 | 0.05 | 19.76 |
| 3 | 69 | 700 | 0.12 | 0.05 | 16.43 |
| 4 | 55 | 700 | 0.12 | 0.05 | 13.10 |
| 5 | 55 | 770 | 0.12 | 0.05 | 11.90 |
| 6 | 55 | 840 | 0.12 | 0.05 | 10.91 |
| 7 | 275 | 700 | 0.12 | 0.05 | 65.48 |
| 8 | 275 | 700 | 0.2 | 0.05 | 39.29 |
| 9 | 275 | 700 | 0.3 | 0.05 | 26.19 |
| 10 | 275 | 700 | 0.5 | 0.05 | 15.71 |
| 11 | | | | | |
| 12 | 275 | 1000 | 0.12 | 0.05 | 45.83 |
| 13 | 275 | 1167 | 0.12 | 0.05 | 39.27 |
| 14 | 275 | 1400 | 0.12 | 0.05 | 32.74 |
| 15 | 275 | 1750 | 0.12 | 0.05 | 26.19 |
| 16 | 275 | 2334 | 0.12 | 0.05 | 19.64 |
| 17 | 275 | 3499 | 0.12 | 0.05 | 13.10 |
| 18 | 275 | 4167 | 0.12 | 0.05 | 11.00 |
| 19 | 275 | 5000 | 0.12 | 0.05 | 9.17 |
| 20 | 275 | 6000 | 0.12 | 0.05 | 7.64 |
| 21 | 275 | 7000 | 0.12 | 0.05 | 6.55 |
| 22 | 275 | 8000 | 0.12 | 0.05 | 5.73 |
| 23 | 275 | 1000 | 0.1 | 0.05 | 55.00 |
| 24 | 275 | 1167 | 0.1 | 0.05 | 47.13 |
| 25 | 275 | 1400 | 0.1 | 0.05 | 39.29 |
| 26 | 275 | 1750 | 0.1 | 0.05 | 31.43 |
| 27 | 275 | 2333 | 0.1 | 0.05 | 23.57 |
| 28 | 275 | 3501 | 0.1 | 0.05 | 15.71 |
| 29 | 275 | 5000 | 0.1 | 0.05 | 11.00 |
| 30 | 275 | 6000 | 0.1 | 0.05 | 9.17 |
| 31 | 275 | 7000 | 0.1 | 0.05 | 7.86 |
| 32 | 275 | 8000 | 0.1 | 0.05 | 6.88 |
| 33 | 275 | 9000 | 0.1 | 0.05 | 6.11 |

| Couche 100µm | | | | | |
|---|---|---|---|---|---|
| n° | Puissance (W) | Vitesse (mm/s) | HD (mm) | Epaisseur (mm) | Densité (J/mm²) |
| 34 | 96 | 700 | 0.12 | 0.1 | 11.43 |
| 35 | 83 | 700 | 0.12 | 0.1 | 9.88 |
| 36 | 69 | 700 | 0.12 | 0.1 | 8.21 |
| 37 | 55 | 700 | 0.12 | 0.1 | 6.55 |
| 38 | 55 | 770 | 0.12 | 0.1 | 5.95 |
| 39 | 55 | 840 | 0.12 | 0.1 | 5.46 |
| 40 | 275 | 700 | 0.12 | 0.1 | 32.74 |
| 41 | 275 | 700 | 0.5 | 0.1 | 7.86 |
| 42 | 275 | 700 | 0.3 | 0.1 | 13.10 |
| 43 | 275 | 700 | 0.2 | 0.1 | 19.64 |
| 44 | 275 | 700 | 0.15 | 0.1 | 26.19 |
| 45 | 189 | 687 | 0.12 | 0.1 | 22.93 |
| 46 | 163 | 691 | 0.12 | 0.1 | 19.66 |
| 47 | 136 | 693 | 0.12 | 0.1 | 16.35 |
| 48 | 109 | 696 | 0.12 | 0.1 | 13.05 |
| 49 | 109 | 766 | 0.12 | 0.1 | 11.86 |
| 50 | 109 | 837 | 0.12 | 0.1 | 10.85 |
| 51 | 275 | 700 | 0.12 | 0.1 | 32.74 |
| 52 | 275 | 778 | 0.12 | 0.1 | 29.46 |
| 53 | 275 | 875 | 0.12 | 0.1 | 26.19 |
| 54 | 275 | 1000 | 0.12 | 0.1 | 22.92 |
| 55 | 275 | 1167 | 0.12 | 0.1 | 19.64 |
| 56 | 275 | 1260 | 0.12 | 0.1 | 18.19 |
| 57 | 275 | 1749 | 0.12 | 0.1 | 13.10 |
| 58 | 275 | 2083 | 0.12 | 0.1 | 11.00 |
| 59 | 275 | 700 | 0.1 | 0.1 | 39.29 |
| 60 | 275 | 778 | 0.1 | 0.1 | 35.35 |

[Fig. 5]

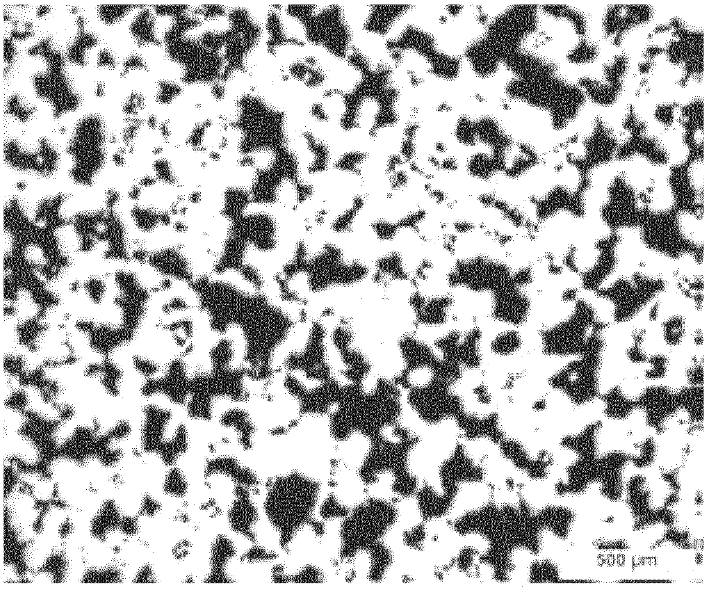
500 µm

[Fig. 6]

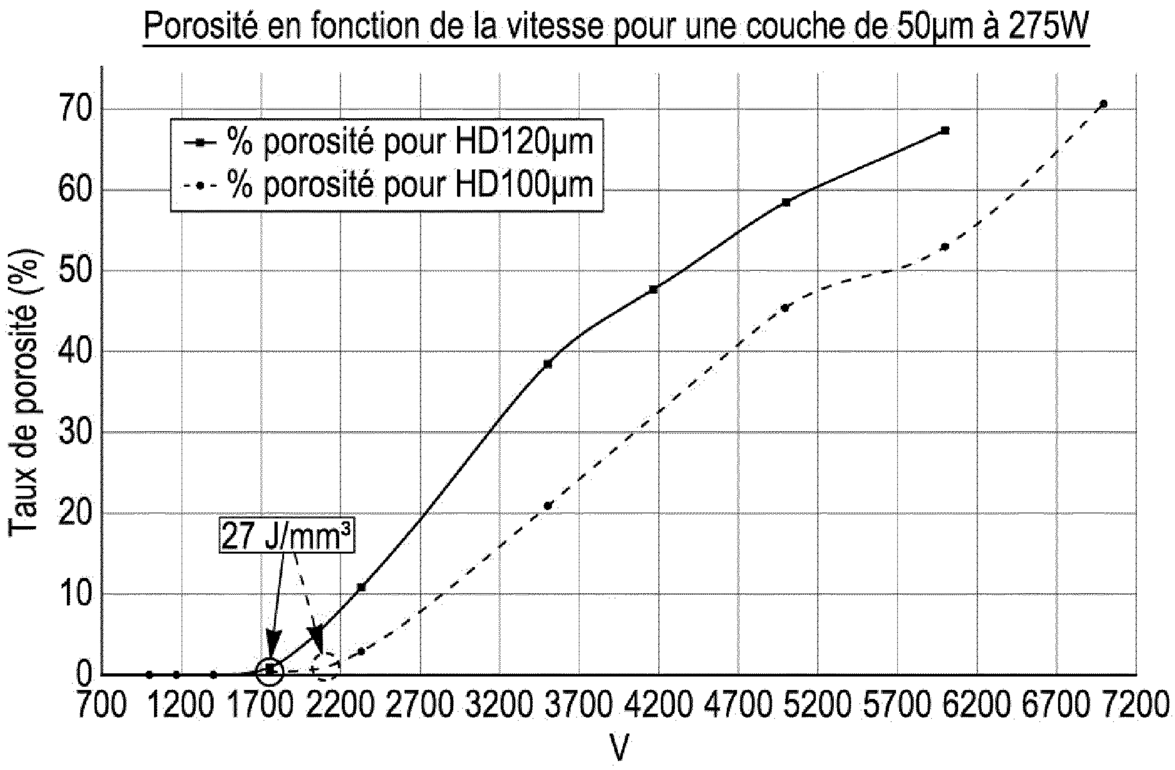
Porosité en fonction de la vitesse pour une couche de 50µm à 275W
% porosité pour HD120µm
% porosité pour HD100µm
Taux de porosité (%)
70
60
50
40
30
20
10
0
27 J/mm³
700 1200 1700 2200 2700 3200 3700 4200 4700 5200 5700 6200 6700 7200
V

[Fig. 7]

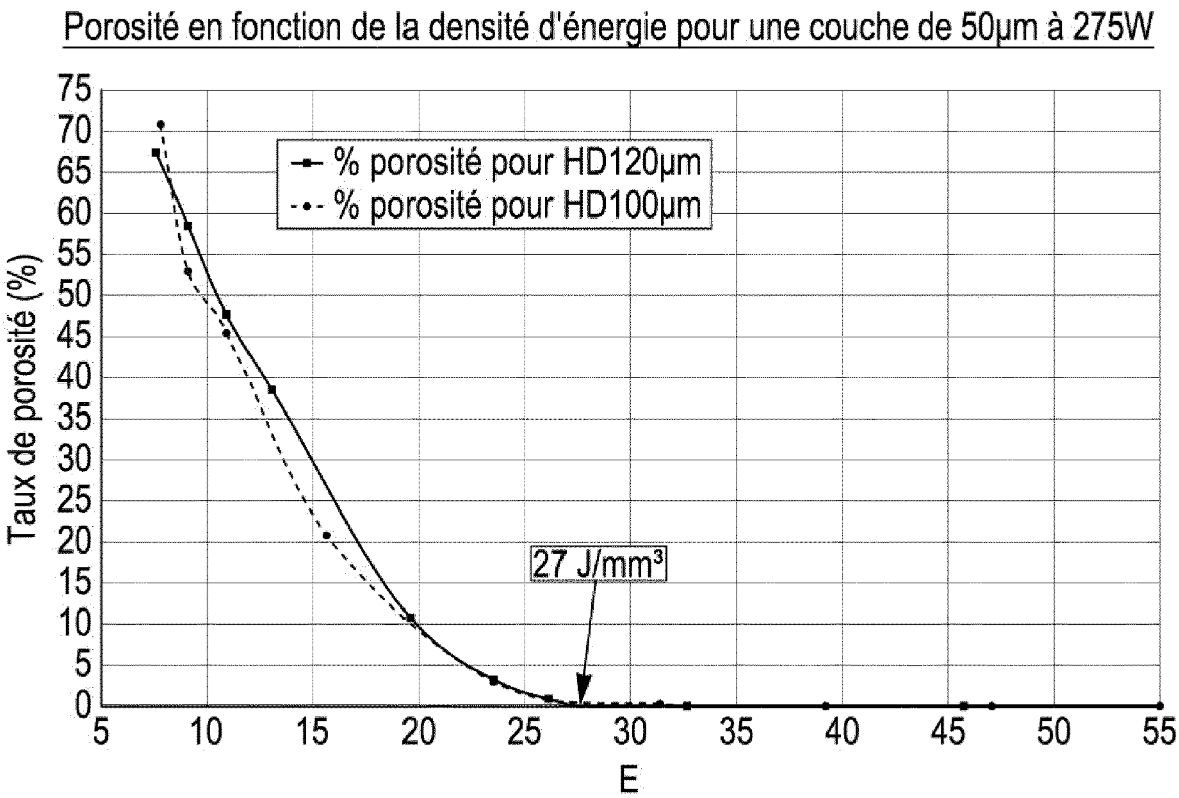
Porosité en fonction de la densité d'énergie pour une couche de 50µm à 275W
Taux de porosité (%)
75
70
65
60
55
50
45
40
35
30
25
20
15
10
5
0
5
10
15
20
25
30
35
40
45
50
55
E
% porosité pour HD120µm
% porosité pour HD100µm
27 J/mm³

[Fig. 8]

| Couche 30µm | | | | | |
|---|---|---|---|---|---|
| n° | Puissance (W) | Vitesse (mm/s) | HD (mm) | Epaisseur (mm) | Densité (J/mm²) |
| 1 | 96 | 700 | 0.1 | 0.03 | 45.71 |
| 2 | 83 | 700 | 0.1 | 0.03 | 39.52 |
| 3 | 69 | 700 | 0.1 | 0.03 | 32.86 |
| 4 | 55 | 770 | 0.1 | 0.03 | 23.81 |
| 5 | 55 | 840 | 0.1 | 0.03 | 21.83 |
| 6 | 96 | 700 | 0.12 | 0.03 | 38.10 |
| 7 | 83 | 700 | 0.12 | 0.03 | 32.94 |
| 8 | 69 | 700 | 0.12 | 0.03 | 27.38 |
| 9 | 55 | 770 | 0.12 | 0.03 | 19.84 |
| 10 | 55 | 840 | 0.12 | 0.03 | 18.19 |
| 11 | 175 | 750 | 0.12 | 0.03 | 64.81 |
| 12 | 175 | 750 | 0.15 | 0.03 | 51.85 |
| 13 | 175 | 750 | 0.2 | 0.03 | 38.89 |
| 14 | 175 | 750 | 0.3 | 0.03 | 25.93 |
| 15 | 175 | 750 | 0.5 | 0.03 | 15.56 |
| 16 | 175 | 1167 | 0.1 | 0.03 | 49.99 |
| 17 | 175 | 1167 | 0.12 | 0.03 | 41.65 |
| 18 | 175 | 1167 | 0.12 | 0.03 | 41.65 |
| 19 | 175 | 1400 | 0.12 | 0.03 | 34.72 |
| 20 | 175 | 1750 | 0.1 | 0.03 | 33.33 |
| 21 | 175 | 1750 | 0.12 | 0.03 | 27.78 |
| 22 | 175 | 2333 | 0.1 | 0.03 | 25.00 |
| 23 | 175 | 2333 | 0.12 | 0.03 | 20.84 |
| 24 | 175 | 3501 | 0.1 | 0.03 | 16.66 |
| 25 | 175 | 3501 | 0.12 | 0.03 | 13.88 |
| 26 | 175 | 5000 | 0.1 | 0.03 | 11.67 |
| 27 | 175 | 5000 | 0.12 | 0.03 | 9.72 |
| 28 | 175 | 6000 | 0.1 | 0.03 | 9.72 |
| 29 | 175 | 6000 | 0.12 | 0.03 | 8.10 |
| 30 | 175 | 7000 | 0.1 | 0.03 | 8.33 |
| 31 | 175 | 7000 | 0.12 | 0.03 | 6.94 |
| 32 | 175 | 8000 | 0.1 | 0.03 | 7.29 |
| 33 | 175 | 8000 | 0.12 | 0.03 | 6.08 |
| 34 | 175 | 9000 | 0.1 | 0.03 | 6.48 |
| 35 | 175 | 9000 | 0.12 | 0.03 | 5.40 |
| 36 | 175 | 750 | 0.1 | 0.03 | 77.78 |
| 37 | 175 | 750 | 0.12 | 0.03 | 64.81 |

[Fig. 9]

| Couche 100µm | | | | | |
|---|---|---|---|---|---|
| n° | Puissance (W) | Vitesse (mm/s) | HD (mm) | Couche (mm) | Densité d'énergie (J/mm^3) |
| HD100_1 | 300 | 4615 | 0.1 | 0.05 | 13.00 |
| HD100_2 | 325 | 5000 | 0.1 | 0.05 | 13.00 |
| HD100_3 | 350 | 5385 | 0.1 | 0.05 | 13.00 |
| HD100_4 | 375 | 5796 | 0.1 | 0.05 | 12.94 |
| HD100_5 | 275 | 5769 | 0.1 | 0.05 | 9.53 |
| HD100_6 | 275 | 6500 | 0.1 | 0.05 | 8.46 |
| HD100_7 | 300 | 5217 | 0.1 | 0.05 | 11.50 |
| HD100_8 | 325 | 5652 | 0.1 | 0.05 | 11.50 |
| HD100_9 | 350 | 6087 | 0.1 | 0.05 | 11.50 |
| HD100_10 | 375 | 6522 | 0.1 | 0.05 | 11.50 |
| HD100_11 | 275 | 4783 | 0.1 | 0.05 | 11.50 |
| HD100_12 | 300 | 6000 | 0.1 | 0.05 | 10.00 |
| HD100_13 | 325 | 6500 | 0.1 | 0.05 | 10.00 |
| HD100_14 | 350 | 7000 | 0.1 | 0.05 | 10.00 |
| HD100_15 | 375 | 7500 | 0.1 | 0.05 | 10.00 |
| HD100_16 | 275 | 5500 | 0.1 | 0.05 | 10.00 |

| Couche 120µm | | | | | |
|---|---|---|---|---|---|
| n° | Puissance (W) | Vitesse (mm/s) | HD (mm) | Couche (mm) | Densité d'énergie (J/mm^3) |
| HD100_1 | 300 | 3817 | 0.12 | 0.05 | 13.00 |
| HD100_2 | 325 | 4135 | 0.12 | 0.05 | 13.00 |
| HD100_3 | 350 | 4453 | 0.12 | 0.05 | 13.00 |
| HD100_4 | 375 | 4771 | 0.12 | 0.05 | 12.94 |
| HD100_5 | 275 | 5093 | 0.12 | 0.05 | 9.53 |
| HD100_6 | 275 | 5729 | 0.12 | 0.05 | 8.46 |
| HD100_7 | 300 | 4202 | 0.12 | 0.05 | 11.50 |
| HD100_8 | 325 | 4552 | 0.12 | 0.05 | 11.50 |
| HD100_9 | 350 | 4902 | 0.12 | 0.05 | 11.50 |
| HD100_10 | 375 | 5252 | 0.12 | 0.05 | 11.50 |
| HD100_11 | 275 | 3852 | 0.12 | 0.05 | 11.50 |
| HD100_12 | 300 | 5000 | 0.12 | 0.05 | 10.00 |
| HD100_13 | 325 | 5417 | 0.12 | 0.05 | 10.00 |
| HD100_14 | 350 | 5833 | 0.12 | 0.05 | 10.00 |
| HD100_15 | 375 | 6250 | 0.12 | 0.05 | 10.00 |
| HD100_16 | 275 | 4583 | 0.12 | 0.05 | 10.00 |

[Fig. 10]

| N° | Nom | P (W) | V (mm/s) | HD (mm) | Densité (J/mm²) | Diam et épaisseur (mm) |
|---|---|---|---|---|---|---|
| 1_1, 2, 3, 4 | 20-P6-SFM-1 a,b,c,d | 275 | 3501 | 0.1 | 15.71 | Φ96/0.6 |
| 2_1, 2, 3, 4 | 20-P6-SFM-2 a,b,c,d | 275 | 3501 | 0.08 | 19.64 | Φ96/0.6 |
| 3_1, 2, 3, 4 | 20-P6-SFM-3 a,b,c,d | 55 | 840 | 0.12 | 10.91 | Φ96/1 |
| 4_1, 2, 3, 4 | 20-P6-SFM-4 a,b,c,d | 275 | 3501 | 0.1 | 15.71 | Φ96/1 |
| 5_1, 2, 3, 4 | 20-P6-SFM-5 a,b,c,d | 350 | 6087 | 0.1 | 11.50 | Φ96/1 |
| 6_1, 2, 3, 4 | 20-P6-SFM-6 a,b,c,d | 350 | 6087 | 0.08 | 14.37 | Φ96/1 |
| 7_1, 2, 3, 4 | 20-P6-SFM-7 a,b,c,d | 275 | 5000 | 0.1 | 13 | Φ96/1 |

[Fig. 11]

| N° | Nom | P (W) | V (mm/s) | HD (mm) | Densité (J/mm²) | Diam et épaisseur (mm) |
|---|---|---|---|---|---|---|
| 1_1, 2, 3, 4 | 20-P7-SFM-1 a,b,c,d | 275 | 3501 | 0.1 | 15.71 | Φ96/0.6 |
| 2_1, 2, 3, 4 | 20-P7-SFM-2 a,b,c,d | 275 | 3501 | 0.08 | 19.64 | Φ96/0.6 |
| 3_1, 2, 3, 4 | 20-P7-SFM-3 a,b,c,d | 55 | 840 | 0.12 | 10.91 | Φ96/1 |
| 4_1, 2, 3, 4 | 20-P7-SFM-4 a,b,c,d | 275 | 3501 | 0.1 | 15.71 | Φ96/1 |
| 5_1, 2, 3, 4 | 20-P7-SFM-5 a,b,c,d | 350 | 6087 | 0.1 | 11.5 | Φ96/1 |
| 6_1, 2, 3, 4 | 20-P7-SFM-6 a,b,c,d | 350 | 6087 | 0.08 | 14.37 | Φ96/1 |
| 7_1, 2, 3, 4 | 20-P7-SFM-7 a,b,c,d | 325 | 5000 | 0.1 | 13 | Φ96/1 |
| Filtre 1.5mm - 2 | 20-P7-SFM-8 a,b,c,d | 275 | 3501 | 0.1 | 15.71 | Φ96/1.5 |
| Filtre 1.5mm - 2 | 20-P7-SFM-9 a,b,c,d | 350 | 6087 | 0.1 | 11.5 | Φ96/1.5 |

[Fig. 12]

| N° | Nom | P (W) | V (mm/s) | HD (mm) | Densité (J/mm²) | Diam et épaisseur (mm) |
|---|---|---|---|---|---|---|
| 3_1, 2, 3 | 20-P8-SFM-3 a,b,c | 55 | 840 | 0.12 | 10.91 | Φ96/1 |
| 4_1, 2, 3 | 20-P8-SFM-4 a,b,c | 275 | 3501 | 0.1 | 15.71 | Φ96/1 |
| 5_1, 2, 3 | 20-P8-SFM-5 a,b,c | 350 | 6087 | 0.1 | 11.5 | Φ96/1 |
| 6_1, 2, 3 | 20-P8-SFM-6 a,b,c | 350 | 6087 | 0.08 | 14.37 | Φ96/1 |
| 7_1, 2, 3 | 20-P8-SFM-7 a,b,c | 325 | 5000 | 0.1 | 13 | Φ96/1 |
| F1 | 20-P8-SFM-1 | 275 | 3501 | 0.2 | 7.85 | Φ96/1 |
| F2 | 20-P8-SFM-2 | 275 | 3501 | 0.2 | 7.85 | Φ96/1 |
| F3 | 20-P8-SFM-8 | 275 | 3501 | 0.12 | 13.09 | Φ96/1 |
| F4 | 20-P8-SFM-9 | 275 | 3501 | 0.12 | 13.09 | Φ96/1 |
| Masque new design | 20-P8-MFM-1 | 275 | 3501 | 0.12 | 13.09 | |
| Masque seul | 20-P8-MFM-2 | 275 | 3501 | 0.12 | 13.09 | |
| Masque M1, M2 M3, M4 | 20-P8-MFM-3, 4, 5, 6 | 275 | 3501 | 0.12 | 13.09 | |

[Fig. 13]

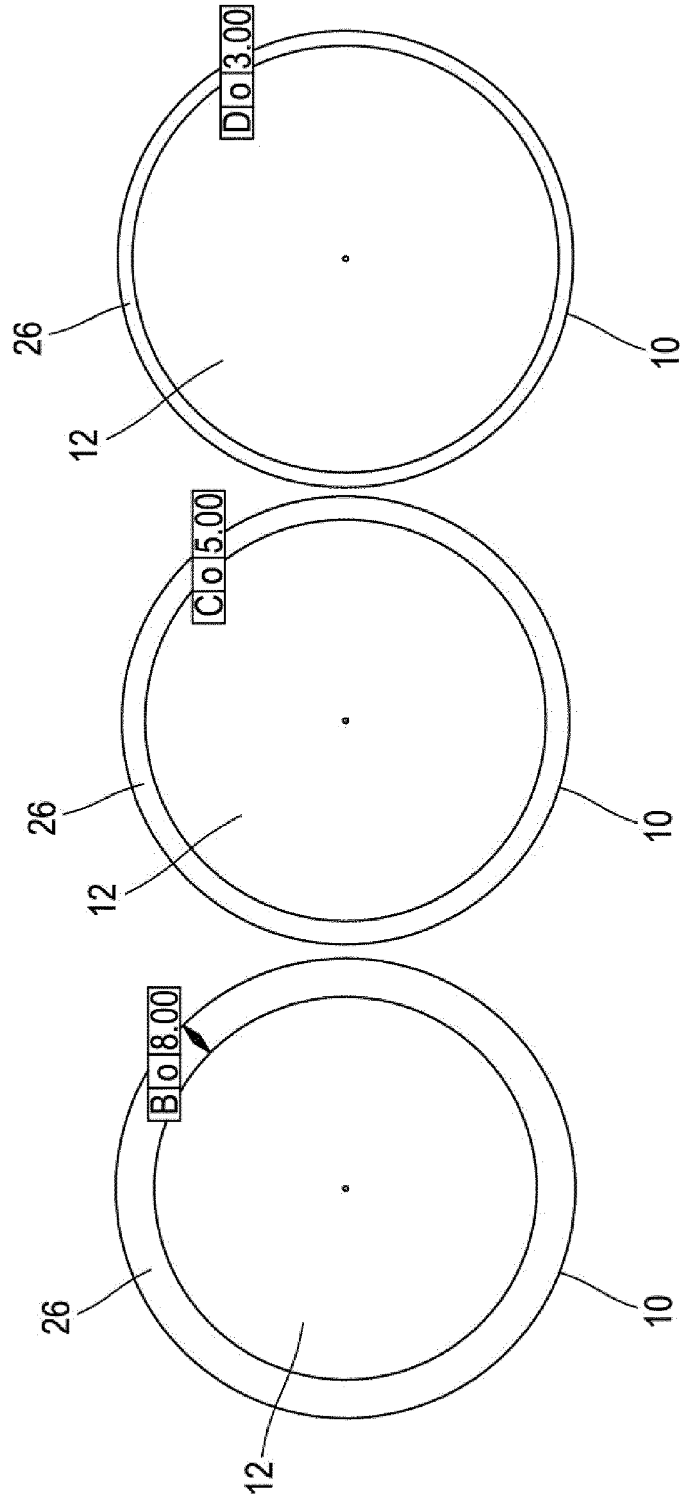

Europäisches Patentamt
European Patent Office
Office européen des brevets

# RAPPORT DE RECHERCHE EUROPEENNE

Numéro de la demande
EP 21 21 6880

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2019/094300 A1 (ENTEGRIS INC [US]) 16 mai 2019 (2019-05-16) * revendications 1,7,8,10-11 * ----- | 19-23 | INV. B22F10/28 B33Y10/00 B33Y80/00 C22C1/08 ADD. B22F5/10 B22F3/11 B01D39/20 B01D39/10 B01D46/10 |
| X | FR 95 146 E (LORRAINE CARBONE [FR]) 24 juillet 1970 (1970-07-24) * exemple 1 * ----- | 19-21,23 | |
| X | WO 2018/005315 A1 (CATERPILLAR INC [US]) 4 janvier 2018 (2018-01-04) * revendications 1,9,10; figures 2,5,9 * * page 13, ligne 16 - page 15, ligne 5 * * page 12, lignes 23-28 * * page 16, lignes 16-27 * ----- | 1,6,19, 20 | |
| X | US 2017/239726 A1 (PALUMBO VINCENT P [US] ET AL) 24 août 2017 (2017-08-24) * alinéas [0026], [0020], [0022], [0023], [0024], [0032], [0049] - [0050]; revendications 1,6,13,23-24,26,33,34; figures 1-3,4,15; exemple 2; tableau II * ----- -/-- | 1-20,22, 23 | DOMAINES TECHNIQUES RECHERCHES (IPC) B22F B33Y B01D F01N C22C B23K B29C B32B |

Le présent rapport a été établi pour toutes les revendications

1

| Lieu de la recherche | Date d'achèvement de la recherche | Examinateur |
|---|---|---|
| La Haye | 13 mai 2022 | Aliouane, Nadir |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................
& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 21 21 6880

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ALFAIFY ABDULLAH ET AL: "Controlling the porosity of 316Lstainless steel parts manufacturedvia the powder bed fusion process", RAPID PROTOTYPING JOURNAL , vol. 25, no. 1 7 janvier 2019 (2019-01-07), pages 162-175, XP055841686, GB ISSN: 1355-2546, DOI: 10.1108/RPJ-11-2017-0226 Extrait de l'Internet: URL:https://www.emerald.com/insight/content/doi/10.1108/RPJ-11-2017-0226/full/pdf?title=controlling-the-porosity-of-316l-stainless-steel-parts-manufactured-via-the-powder-bed-fusion-process * le document en entier * ----- | 8-13 | |
| A | EP 1 418 013 A1 (HOWMEDICA OSTEONICS CORP [US]) 12 mai 2004 (2004-05-12) * alinéas [0008], [0059], [0067]; figure 1 * ----- | 8-13 | DOMAINES TECHNIQUES RECHERCHES (IPC) |

Le présent rapport a été établi pour toutes les revendications

1

| Lieu de la recherche | Date d'achèvement de la recherche | Examinateur |
|---|---|---|
| La Haye | 13 mai 2022 | Aliouane, Nadir |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........
& : membre de la même famille, document correspondant

EPO FORM 1503 03.82 (P04C02)

# ANNEXE AU RAPPORT DE RECHERCHE EUROPEENNE RELATIF A LA DEMANDE DE BREVET EUROPEEN NO.

EP 21 21 6880

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-05-2022

| Document brevet cité au rapport de recherche | Date de publication | Membre(s) de la famille de brevet(s) | Date de publication |
|---|---|---|---|
| WO 2019094300 A1 | 16-05-2019 | CN 111542407 A | 14-08-2020 |
| | | EP 3706948 A1 | 16-09-2020 |
| | | JP 2021502483 A | 28-01-2021 |
| | | KR 20200070408 A | 17-06-2020 |
| | | TW 201929981 A | 01-08-2019 |
| | | US 2021069792 A1 | 11-03-2021 |
| | | WO 2019094300 A1 | 16-05-2019 |
| FR 95146 E | 24-07-1970 | AUCUN | |
| WO 2018005315 A1 | 04-01-2018 | CN 109414633 A | 01-03-2019 |
| | | DE 112017002934 T5 | 14-03-2019 |
| | | US 2018001236 A1 | 04-01-2018 |
| | | WO 2018005315 A1 | 04-01-2018 |
| US 2017239726 A1 | 24-08-2017 | CA 3006970 A1 | 06-07-2017 |
| | | CN 108698123 A | 23-10-2018 |
| | | EP 3397412 A1 | 07-11-2018 |
| | | JP 2019509393 A | 04-04-2019 |
| | | KR 20180111816 A | 11-10-2018 |
| | | US 2017239726 A1 | 24-08-2017 |
| | | WO 2017117527 A1 | 06-07-2017 |
| EP 1418013 A1 | 12-05-2004 | AT 287307 T | 15-02-2005 |
| | | AU 2003261497 A1 | 27-05-2004 |
| | | CA 2448592 A1 | 08-05-2004 |
| | | DE 60300277 T2 | 12-01-2006 |
| | | EP 1418013 A1 | 12-05-2004 |
| | | US 2004191106 A1 | 30-09-2004 |
| | | US 2009286008 A1 | 19-11-2009 |
| | | US 2010291286 A1 | 18-11-2010 |
| | | US 2013056912 A1 | 07-03-2013 |
| | | US 2015258735 A1 | 17-09-2015 |
| | | US 2020086625 A1 | 19-03-2020 |
| | | US 2021162731 A1 | 03-06-2021 |
| | | US 2021379884 A1 | 09-12-2021 |

EPO FORM P0460

Pour tout renseignement concernant cette annexe : voir Journal Officiel de l'Office européen des brevets, No.12/82